# EUROPEAN PATENT SPECIFICATION

(11) **EP 1 831 561 B1**
(45) Date of publication and mention of the grant of the patent: **16.05.2012**
(21) Application number: 05855744.8
(22) Date of filing: 28.12.2005
(51) Int. Cl.: F04B 17/03

(54) **MINIATURE ROTARY COMPRESSOR, AND METHODS RELATED THERETO**
MINIATURROTATIONSKOMPRESSOR UND DAMIT VERWANDTE VERFAHREN
COMPRESSEUR ROTATIF MINIATURE ET PROCEDES ASSOCIES

(30) Priority: 29.12.2004 US 640699 P
(43) Date of publication of application: 12.09.2007
(73) Proprietor: Aspen Compressor, LLC., Marlborough, MA 01752 (US)
(72) Inventor: DEMING, Glenn, I., Lunenberg, MA 01462 (US); OLSEN, Douglas, S., Framingham, MA 01760 (US); LEE, Kang, P., Sudbury, MA 01776 (US); GRONEMEYER, William, Wilmington, MA 01887 (US); SLAYTON, Curtis, R., Louisville, KY 40299 (US)
(74) Representative: Moore, Barry
(86) International application number: PCT/US2005/047233
(87) International publication number: WO 2006/071929

(56) References cited:
- WO-A-2004/029462
- JP-A- 04 171 279
- US-A- 4 631 006
- US-A- 4 964 788
- US-A- 5 240 388
- US-A- 5 257 913
- US-A- 5 947 892
- US-A1- 2004 241 010
- US-A1- 2005 123 418
- US-B2- 6 398 520

## Description

### TECHNICAL FIELD

The present invention relates generally to rotary compressors, and methods rotated thereto. Specifically, the present invention pertains to a rolling piston type miniature rotary compressor for use with primary refrigerants as the working fluid, as used in vapor compression systems. This miniature rotary compressor is specially useful in applications that require small and ultralight cooling systems, which can be battery-powered for portability and used in hot environments that are impractical for conventional air conditioning.

### BACKGROUND

The emergence of new small-scale technologies has created an environment in which conventional space conditioning may be displaced. One area where such displacement may occur is in the thermal management of various electronic components, such as microprocessors, telecommunications, and guidance equipment. Other areas include man-portable systems for thermal protection of aviators, soldiers, emergency response teams, and hazardous materials handlers. The design of these systems place special requirements on cooling system components not previously encountered in stationary refrigeration systems. Due to the special service that these applications require, the compressor and refrigeration system must be ultra-light weight, highly compact, very durable, shock-resistant, and perform safely in different orientations.

Several types of compressors are currently available for use in refrigeration systems. For home refrigerators and air conditioners, rolling piston compressors are commonly used. Rolling piston compressors are also referred to as fixed (or stationary) vane rotary compressors. In such a compressor, the vane does not rotate along with the rotor, but instead reciprocates in a slot enclosed by the stationary part of the compressor. The cylindrical part of the compressor that is mounted on the eccentric shaft is named a rolling piston because it appears to roll on the cylindrical surface of the cylinder wall. During the suction part of the cycle, refrigerant gas is drawn through an inlet port into the compression chamber, increasing the gas volume. During the suction process, the compression stroke takes place in a decreasing volume on the opposite side of the piston and vane. Therefore, gas is compressed due to the eccentric motion of the roller. Discharge flow is controlled via a discharge valve.

While the small size (for a given capacity) of rolling piston compressors is advantageous, the leakage of refrigerant along surfaces of the cylinder wall is disadvantageous. Lubricating oil that is added to the compressor performs two functions essential to the proper functioning of the compressor's pump parts. The first function pertains to the lubrication of the moving parts themselves. The second function pertains to the sealing of all clearances between the moving parts, which minimizes direct gas leakage that can adversely affect the capacity and efficiency of the compressor.

There is a need for a miniature scale rotary compressor suitable for mobile and portable applications, where grid or vehicle power may not be available. Until now, this scale has never before been attained or reduced to practice in a rotary compression device for high internal pressures. In following the scaling laws for compression devices, the miniaturization of such devices have inevitably encountered serious technical hurdles, most notably in the machining of parts and in specifying reasonable dimensional tolerances. During the process of designing a miniature rotary compressor, the dimensions and tolerances of compression elements, including rotating shaft, bearings, roller, vane, and cylinder, must be scaled and apportioned to the pressure and lower flow conditions. Dimensional tolerances and surface finishes are critical in the miniaturization process and have a direct effect on performance variation and repeatability of each compressor. Further, at some point in the process of reducing the size and scale of the compressor parts, it may not be possible to manufacture parts cost-effectively to the stringent dimensional tolerances necessary to match the compressor's performance at the larger scale, or to maintain the same efficiency of the larger scale system. The packaging of these parts within a small control volume also entails numerous technical challenges.

In dynamic turbomachinery components, the size, rotational speed, and the pressure ratio across the machine are all related. Moreover, the design relationships for turbo-machines present a serious problem for a miniature system, as the compact size requires small radii, high reliability requires slow rotation speed, and high efficiency requires large pressure ratio. Thus, miniaturization cannot be easily accomplished while maintaining high efficiency. This problem can be alleviated to some extent through the use of multiple stages, but at the cost of complexity and size. The design of the miniature compressor is further complicated by the requirement of a low mass flow rate, corresponding to the low power required for the electrical motor drive unit. The low flow rate of the refrigerant increases the relative leakage flow rate through various gaps.

The typical design rules that are applicable to conventional size components are not applicable to miniature sized components. Miniaturization produces a larger surface-to-volume ratio of compressor pump parts. In addition, refrigerant losses in a rotary compressor are directly related to the clearances of the machined parts, the surface area required for lubrication, and the lubricant used. Thus, the reduced size will result in a predictable loss of efficiency, unless the design is altered to counter those losses. Further, a simple repackaging of a conventional design will not provide the optimum performance in the miniature scale. The miniature compressor must use a fresh and novel design that is optimized for and accommodate the smaller size and fabrication limitations associated with smaller sizes.

Until recently, existing rotary compressors have been successfully downsized only to a limited degree. Such compressors have relatively large overall size and weight that render them unusable in the emerging areas defined above. The smallest commercially available rotary compressor is about 12,7 cm (5 inches (in.)) tall, 10,2 cm (4 in.) in diameter, and weighs more than 2,27 kg (5 pounds). Moreover, the efficiency/performance of such a compressor declines as its dimensions and weight are reduced.

Published PICT Patent Application No. WO 2004/029462, which is the closest prior art document, is intended to enable oilless operation for a pump which is used to supply air to a fuel battery, to enable easy and accurate alignment between the axes of a pump mechanism and a motor, and to reduce the size of the whole pump. Used in the invention are a plate-like vane made of a material having a self-lubrication property, and a front plate and a rear plate having a self-lubrication material on its slide surface, and the mechanical shaft of the pump mechanism is integrated with the motor shaft of a dc motor.

US Patent Application No. 5,257,913 discloses a hand tool. The hand tool has an elongated housing, an adapter at one end of the housing, an electric motor in the housing, and a vane pump in the housing flanged directly to and driven by the motor and having an intake. A conduit is connected in the housing between the intake of the vane pump and the adapter. A battery in the housing is connected to the motor to drive same.

### SUMMARY OF THE INVENTION

Accordingly, a first embodiment of the invention provides a miniature rolling piston rotary gas compressor assembly as detailed in claim 1. The invention also provides an article as detailed in claim 10. Additionally, the invention provides a method as detailed in claim 11. Advantageous embodiments are provided in the dependent claims.

Various configurations for rolling piston rotary compressors for standard refrigerants exist at present. However, even the smallest of these known rolling piston rotary compressors are too bulky and/or non-mobile and/or do not provide sufficient cooling effect for applications that require small and ultralight portable compressors.

In view of the above, there is a need for a compact, ultralight, miniature rolling piston rotary compressor for use with standard refrigerants. There is also a need for methods of manufacturing an ultralight, miniature rotary compressor.

It is, therefore, desirable to provide a compact, ultralight, miniature rolling piston rotary compressor having a diameter of up to about (2.5 in.) 63.5mm, axial length of up to about (3.5 in.) 88.9mm weight of up to about (1.7 pounds) 771.11g, and displacement of up to about 3.0 cc/revolution.

It is desirable to provide an ultralight, miniature rolling piston rotary compressor that provides a higher power density and comparable efficiency as compared to state-of-the-art refrigerant-based rotary compressors.

It is desirable to provide an ultralight, miniature rolling piston rotary compressor that is reliable, that can be used with a range of refrigerants and can be produced cost-effectively.

It is desirable to provide a miniature rolling piston rotary compressor suitable for portable refrigeration applications, such as personal cooling systems, small refrigerators and freezers, portable blood coolers, beverage coolers, etc. where size, weight, and other factors, such as efficiency, do not inhibit functionality, and for small stationary applications, such as cooling for microprocessors and other electronics components that generate substantial amounts of heat.

It is also desirable to provide methods for manufacturing an ultralight, miniature rolling piston rotary compressor.

An exemplary arrangement pertains to an ultralight, miniature rolling piston rotary compressor comprising a compressor mechanism, a casing and a brushless DC motor. The miniature rotary compressor's mechanism is housed in a hermetically or semi-hermetically sealed casing. The compressor mechanism comprises a compression cylinder, a shaft having an eccentric part, top and bottom bearings to support the shaft, openings for communicating with lubricant oil, a roller, a vane, and inlet (also referred to as suction) and discharge ports. The compressor mechanism may further comprise an oil pump and an oil separator. The bottom portion of the casing acts as a lubricant oil reservoir.

In one arrangement, a hermetically-sealed miniature rolling piston rotary compressor comprises three casing sections, the top cap, the case sleeve, and the bottom cap, that are preferably joined by welding. In another arrrangement, the compressor comprises three or more electrical feedthrough pins, wherein the three or more electrical feedthrough pins are incorporated via sealing with an insulating glass directly into the top cap.

The miniature rotary compressor of the exemplary arrangement is significantly smaller and lighter than state-of-the art rotary compressors, while providing comparable efficiency/performance. In one arrangement, the miniature rolling piston rotary compressor has a diameter of about (2.2 in.) 55.88mm, axial length of about (2.7 in.) 68.58mm, and weight of about (1.4 pounds) 635.03g. In another arrangement, the displacement of the miniature rolling piston rotary compressor is 20 percent of the smallest state-of-the-art compressor's displacement. In another arrangement, the physical size volume of the miniature rolling piston rotary compressor is 7.5 percent of the smallest state-of-the-art compressor's size volume. In another arrangement, the oil pump of the miniature rolling piston rotary compressor pumps oil volume that is about 61 percent the oil volume of the state-of-the-art compressor, at comparable motor speeds. In another arrangement, the miniature rolling piston rotary compressor comprises an inlet hole having a diameter that is 76 percent that of the state-of-the-art compressor. In yet another arrangement, the miniature rolling piston rotary compressor comprises an upper flange bearing having a length that is 40 percent that of the state-of-the-art compressor, while the lower flange bearing length is 84 percent that of the state-of-the-art compressor.

In one arrangement, a three-pin feed through for powering the motor drive is assembled and placed within the casing. In another arrangement, a thin-walled compressor casing is utilized while meeting the structural requirements of the ASME Pressure Vessel Code, and the hydrostatic test requirements of UL for hermetic compressors. In another arrangement, a support structure is utilized for the side-mounted outlet connection, which is used to keep the overall axial length to a minimum. In another arrangement, a muffler is incorporated in a way that oil loss is minimized while allowing for the smallest casing axial length and diameter to provide the desired cooling capacity and coefficient of performance. In another arrangement, the motor is fastened to the shaft without the use of heat shrinking.

An exemplary arrangement also pertains to methods for manufacturing a miniature rolling piston rotary compressor. In one arrangement, a method for manufacturing a miniature rolling piston rotary compressor comprises the machining of component parts at a given set of tight tolerances, and incorporating a brushless DC motor that operates preferably at speeds of up to 7000 rpm. In another arrangement, a manufacturing method comprises assembling a cylinder, a shaft, roller, a vane, top and bottom bearing flanges with a drive motor and a casing. In another arrangement, the cylinder, roller, vane, shaft, top and bottom bearing flanges are each assembled prior to assembly with the drive motor, and casing. In another arrangement, the rotor of the motor is attached to the shaft in such a way as to avoid heating, which may damage the motor magnet. In another arrangement, a method of plasma-welding the casing is utilized in such a way as to avoid heat damage to the motor.

The figures and the detailed description that follow particularly exemplify these exemplary arrangements.

### BRIEF DESCRIPTION OF THE DRAWINGS

The invention may be more completely understood in consideration of the following detailed description of various exemplary arrangements of the invention in connection with the accompanying drawings, in which:

**FIG. 1a** illustrates a cross-sectional side view of a hermetically sealed miniature rolling piston rotary compressor having an inlet tube and a discharge tube,

**FIG. 1b** illustrates an enlarged cross-sectional side view of the rotor mounting,

**FIG. 1c** illustrates an enlarged cross-sectional top view of the rotor mounting;

**FIG. 1d** illustrates an enlarged cross-sectional side view of an alternative rotor mounting;

**FIG. 2** illustrates a cross-sectional top view of a hermetically sealed miniature rolling piston rotary compressor of **FIG. 1a** (defined as view A-A),

**FIG. 3** schematically illustrates an exploded view of the compressor assembly components of **FIG. 1a**,

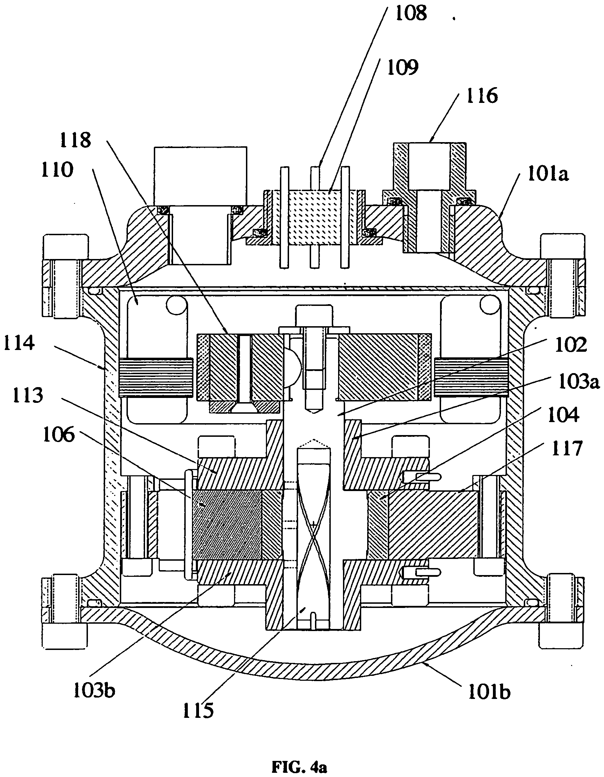

**FIG. 4a** illustrates a cross-sectional side view of a semi-hermetically sealed miniature rolling piston rotary compressor,

**FIG. 4b** illustrates a cross-sectional top view of a semi-hermetically sealed miniature rolling piston rotary compressor, and

**FIG. 5** illustrates slanted slots inside of the stack of stator laminations.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention as defined by the appended claims.

### DETAILED DESCRIPTION

The present invention pertains to a miniature rolling piston rotary compressor for primary refrigerants designed primarily for portable refrigeration applications, such as in personal cooling systems, small refrigerators and freezers, portable blood coolers, beverage coolers, etc. where size, weight, and factors, such as efficiency, do not inhibit functionality. This miniature rolling piston rotary compressor is also suitable for small stationary applications, such as cooling for microprocessors, lasers, x-rays, and other electronic components that generate substantial amounts of heat.

### 1. Definitions

The term "ultralight" or "ultralight weight", as used herein, refers to a mass that is low enough that when included within a complete refrigeration system with portable power supply, it can be mounted upon a person comfortably without encumbrance. Within this context, a compressor weight of less than (2.0 pounds) 907.18g and a cooling capacity of about 100 to about 500 Watts, can meet the requirements for portability for personal cooling. However, the final resultant mass of the portable cooling system is not only dependent on the mass of the compressor, but also on the compressor's efficiency which governs the size and mass of the power source, e.g. battery, fuel cell, or solar cell.

The term "displacement", as used herein, refers to the volume of gas that is pumped by a single revolution of the piston in a compressor.

The term "COP" or "coefficient of performance", as used herein, refers to the dimensionless ratio of cooling output (in Watts) to power input (in Watts).

The term "tolerance", as used herein, refers to the allowable amount of variation of specified quantity in the dimensions of a given part.

It is to be understood that the singular forms of "a", "an", and "the", as used herein and in the appended claims, include plural reference unless the context clearly dictates otherwise.

### 2. The Miniature Rolling Piston Rotary Compressor

The present invention is configured and designed for the realization of an ultralight, miniature rolling piston rotary compressor. The present miniature rolling piston rotary compressor provides a high power density and efficiency as compared to state-of-the-art refrigerant-based and non-refrigerant based rotary compressors. The combination of its unique features, such as its size, weight, durability (particularly with a hermetic casing), and lubrication system, make the present compressor well-suited for portable applications, however, it may also be used in small stationary applications.

The miniature rolling piston rotary compressor of the present invention is an assembly that comprises a compressor mechanism, a casing, and a brushless DC motor for driving the compressor mechanism. Preferably, the brushless DC motor operates at a variable speed ranging up to a maximum of about 7000 rpm. The DC compressor motor can be powered by batteries, fuel cells, or solar cells. When generated power is available, the compressor can be powered through a DC power supply.

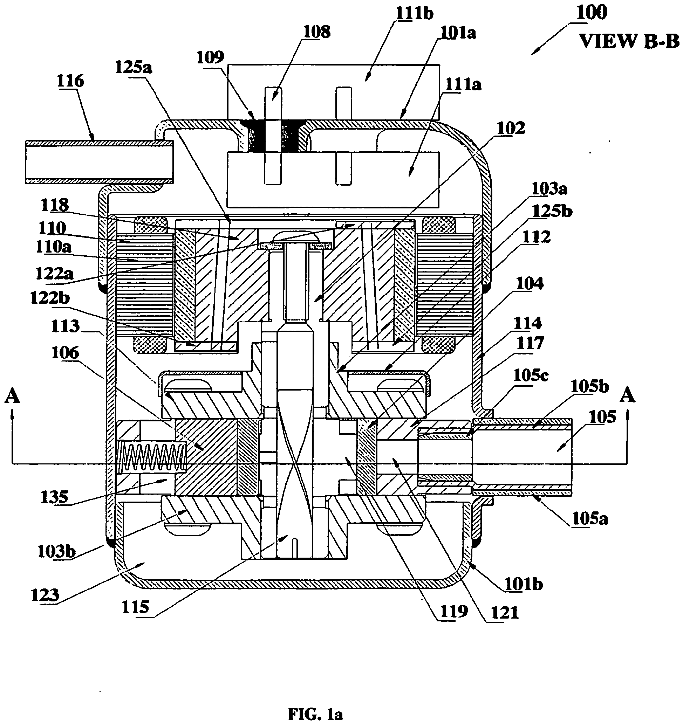

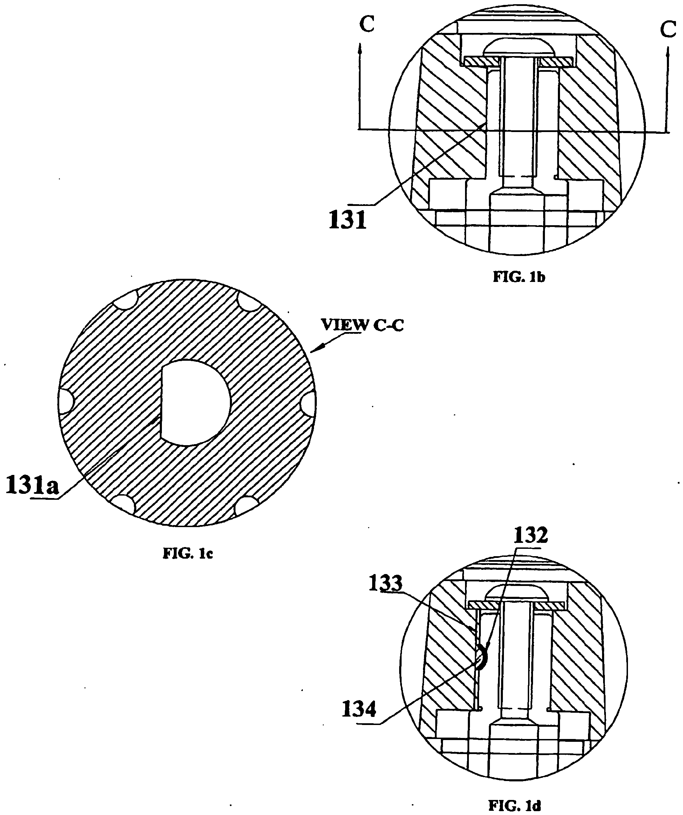

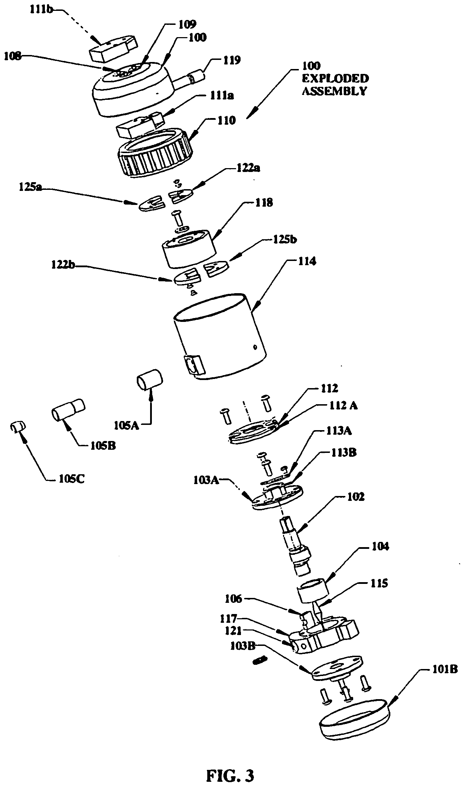

In one embodiment of the present invention, a compressor assembly **100** comprises a compression cylinder **117**, a shaft (also referred to as a crankshaft) **102** having an eccentric part 119, an upper bearing (also referred to as top flange) **103a** and a lower bearing (also referred to as bottom flange) **103b** to support the shaft **102**, a roller **104**, a vane **106**, and a suction tube assembly **105** comprising a case suction sleeve **105a**, a suction tube **105b**, and a suction collar **105c**, and a discharge tube **116** for communicating a refrigerant with the compressor assembly **100,** as illustrated in **FIG. 1a**. As illustrated in **FIG. 1a** and **FIG. 3**, the rotor **118** of brushless DC motor is in mechanical communication with the compressor mechanism via the shaft **102**. The miniature rolling piston rotary compressor also comprises a lubricant oil sump **123** and an oil pump **115** for pumping lubricating oil. The lubricating oil may be any oil compatible with the primary refrigerant selected for use in the miniature rolling piston rotary compressor. Examples of suitable lubricants for use with HFC refrigerants include Polyolester (POE) and Polyvinyl ether (PVE) lubricants. For cooling applications, the refrigerant HFC-134a may be used, whereas for low temperature (freezing) applications, HFC-404A may be selected. The refrigerant may be any suitable primary refrigerant that is effective in a given temperature range of interest, preferably any standard halocarbon refrigerant, or a blend thereof.

The miniature rolling piston rotary compressor may be controlled by an external controller, which is not part of the compressor assembly **100**. In one embodiment of the present invention, the compressor is controlled by varying the speed of the motor to meet the load demand. The motor can start at very low speeds and increased to any speed within a wide range to closely follow the cooling capacity of the compressor assembly to meet the instantaneous load requirement.

In one embodiment of the present invention shown in **FIG. 1a**, the miniature rotary compressor of the present invention is housed in a hermetically sealed casing. In such a casing, the miniature rotary compressor assembly comprises three casing sections; the top cap **101a**, bottom cap **101b**, and case sleeve **114** that are preferably joined by welding. In another embodiment, the compressor assembly **100** is housed in a semi-hermetically sealed casing. In such a casing, the miniature rolling piston rotary compressor assembly may further comprise one or more o-ring seals.

The miniature rolling piston rotary compressor of the present invention is significantly smaller and lighter than the state-of-the art rotary compressors, while providing comparable efficiency/performance. The miniature rolling piston rotary compressor of the present invention comprises a diameter of up to about (2.5 in.) 63.5mm, preferably in the range from about (1.5 in.) 38.1mm to about (2.5 in.) 63.5mm, axial length of up to about (3.5 in.) 88.9mm, preferably in the range of from about (1.5 in.) 38.1mm to about (3.0 in.) 76.2mm, more preferably from about 2.0 in) 50.8mm to about (2.8 in.) 71.12mm, displacement of up to about 3.0 cc/revolution, preferably in the range of from about 0.90 cc/rev to about 3.0 cc/rev, more preferably from about 1.2 cc/rev. to about 3.0 cc/rev., and weight of up to about (1.7 pounds) 771.11g, preferably in the range of from about (0.8 lbs) 362.87g to about (1.5 lbs) 680.39g more preferably from about (1.0 lbs) 453.59g to about (1.4 lbs) 635.029. In one embodiment of the present invention, the miniature rolling piston rotary compressor comprises a diameter of about (2.2 in.) 55.88mm, axial length of about (3.0 in.) 76.2mm, and weight of about (1.2 pound) 544.31g.

In one embodiment of the present invention, the miniature rolling piston rotary compressor comprises a displacement that is 20 percent of the smallest state-of-the-art compressor's displacement. In another embodiment, the physical size volume of the miniature rolling piston rotary compressor is 7.5 percent of the smallest state-of-the-art compressor's size volume. In another embodiment, the oil pump of the miniature rolling piston rotary compressor is designed to pump oil volume that is about 61 percent the oil volume of the state-of-the-art compressor at comparable motor speeds. In another embodiment, the miniature rolling piston rotary compressor comprises an inlet port having a diameter that is 76 percent that of the state-of-the-art compressor. This removes any flow restrictions, particularly at high compressor speeds, and enhances compressor thermodynamic performance. In yet another embodiment, the miniature rolling piston rotary compressor comprises a top flange bearing having a length that is 40 percent that of the state-of-the-art compressor, while the bottom flange bearing length is 84 percent that of the state-of-the-art compressor. In relative terms, the design of the present miniature rolling piston rotary compressor provides for a stiffer support system given the longer bottom flange.

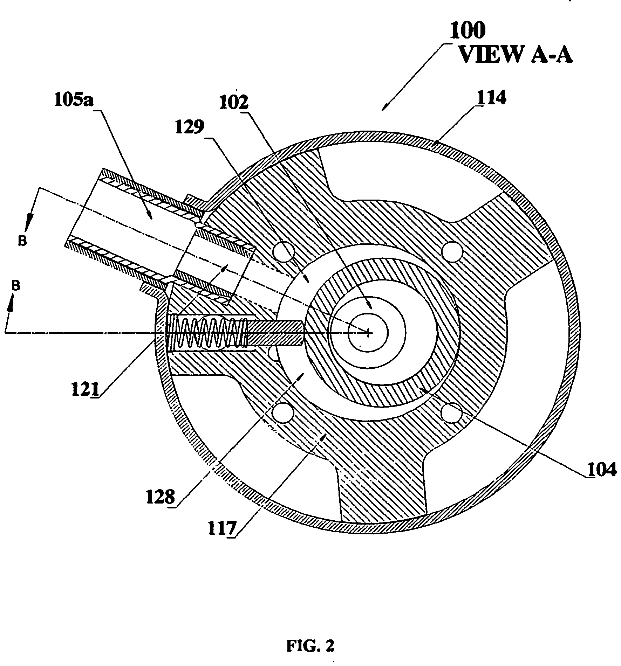

In one embodiment of the present invention, a hermetically sealed miniature rolling piston rotary compressor comprises a hermetic casing **114**, which may comprise a top cap **101a** and a bottom cap **101b**. A brushless DC motor stator **110** is interference fitted into the casing **114** in coaxial relation with the shaft **102** which is driven by the motor. As illustrated in **FIG. 1a****,** **FIG. 2** and **FIG. 3**, the compressor mechanism **100** comprises a cylinder **117**, upper **103a** and lower **103b** bearing members mounted to close the upper and lower end surfaces of the cylinder **117**, a shaft **102** with the motor rotor **118** mounted on one end and supported on the top side by the upper bearing member **103a** and the bottom side by the lower bearing member **103b**, a rotary compression mechanism, for example, a roller **104** eccentrically rotated within in the cylinder **117** by the shaft eccentric **119**, a suction port **121** is placed in the cylinder wall, a discharge valve port **113** is placed in the top flange **103a** and in communication with the cylinder **117,** and a vane **106** that is slidably mounted for engagement with the roller **104** to divide the cylinder **117** into a high pressure **128** and low pressure **129** sides or chambers.

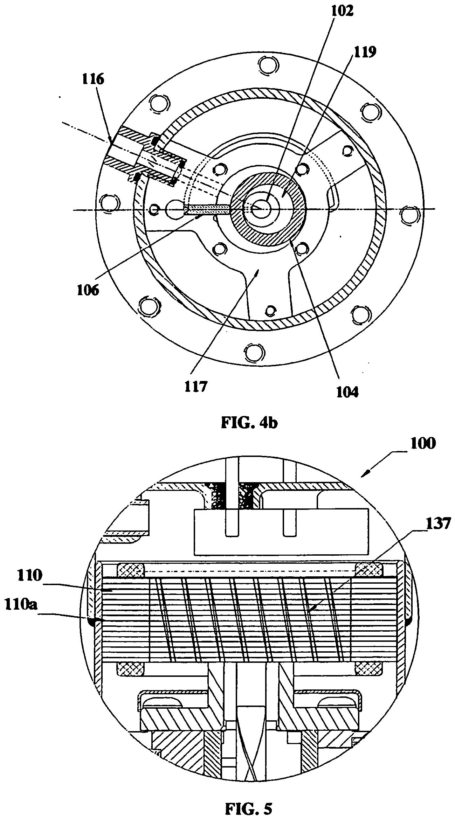

In state of the art compressors, compressor assembly contains a fixed motor stator. The stator comprises multiple layers of sheet metal referred to as laminations. The stack of laminations forms slots which are located on the inside diameter of the stator for the purpose of providing a space for the motor windings. In a typical motor of the state-of-the-art compressors, these slots are oriented in a vertical fashion. In one embodiment of the present invention, as shown in **FIG. 5****,** the stator **110,** comprising a stack of laminations **110a**, comprises slanted slots **137** that are sloped from top to bottom in the direction of the rotating shaft **102**. The sloped slots act as an oil groove allowing oil entrained in the refrigerant gas to be gathered and returned to the oil sump **123**. In this embodiment, the oil return is enhanced due to the rotational flow created by the spinning rotor resulting in oil flow toward the sump. The motor air gap is the primary path for lubricant to leave the compressor assembly **100**, and this reverse oil flow in the slots in the lamination stack will tend to reduce the amount of oil leaving the compressor assembly **100** entrained in the refrigerant. The slots **137** in the laminations stack **110a** of stator **110** are preferably slanted to divert oil toward the sump **123**, and thus function to reduce the oil circulation rate and to retain a higher oil level in the oil sump.

In one embodiment of the present invention, the top cap **101a** is positioned such that the weld to the casing **114** is located in the center of the motor stator laminations **110a**. This configuration allows the use of the stator laminations as a heat sink, and thereby minimizes or even prevents the possibility of damaging the stator windings from heat from the welding operation.

The compressor assembly parts and the casing **114** are fabricated from mostly metallic materials that may comprise different grades of ferritic alloys as used in current state-of-the-art art rolling piston compressors.

In one embodiment of the present invention, the cross-sectional area of the gas leakage in the miniature rolling piston rotary compressor is smaller than that of state-of-the-art rotary compressors, allowing reduced size of the vane width, vane length, and roller wall thickness while maintaining high efficiency.

In one embodiment of the present invention, the shaft **102** and rotor **118** are joined with a mechanical fastener without the use of heat to prevent heat damage to the rotor magnet. Rather than heat shrinking, a flat **131** is ground onto the shaft **102**, matching a flat 131a on the rotor **118**. Alternatively, a key way **133** can be machined in the rotor **118** for a woodruff key **134**.

The miniature rolling piston rotary compressor of the present invention is an ultralight and small rotary compressor that provides efficiency/performance comparable to the larger state-of-the-art rotary compressors. The COP for the present miniature rotary compressor is in the range of from about 1.5 to about 4.5 at the operating conditions of interest of evaporator temperature in the range of from about (40 °F) 4.40°C to about (60 °F) 1.5.56°C and condenser temperature in the range from about (85 °F) 29.44°C to about (160 °F) 71.11°C, for personal cooling applications. In one embodiment, the miniature rotary compressor comprises a maximum COP in the range of from about 1.85 to about 2.25, at evaporator temperature of (55 °F) 12.78°C and condenser temperature of (150 °F) 65.56°C. In another embodiment, the miniature rotary compressor comprises a maximum COP in the range of from about 3.8 to about 4.6, at evaporator temperature of (55 °F) 12.78°C and condenser temperature of (110°F) 43.33°C.

The size and weight of the miniature rolling piston rotary compressor enable it to be better adapted for portable applications than the state-of-the-art rotary compressors. The present compressor may be used in portable refrigeration applications, such as personal cooling systems, small refrigerators and freezers, portable blood coolers, beverage coolers, etc. where size, weight, and other factors do not inhibit functional mobility. The miniature rolling piston rotary compressor may also be used in small stationary applications, such as electronics cooling for microprocessors and other components that generate substantial amounts of heat.

### 3. Methods of Manufacturing a Miniature Rolling Piston Rotary Compressor

The present invention also pertains to methods for manufacturing a miniature rolling piston rotary compressor. In one embodiment, a manufacturing method comprises the steps of machining parts of the compressor assembly at a given set of tolerances, and incorporating a brushless DC motor that operates preferably at high revolutions per minute (rpm), *e.g.,* up to about 7000 rpm. In another embodiment, a manufacturing method comprises assembling a cylinder, a shaft, roller, a vane, top and bottom bearing flanges with a drive motor, and a casing. In another embodiment, the cylinder, roller, vane, shaft, top and bottom bearing flanges are assembled into the compressor pump assembly prior to final assembly with the drive motor and casing.

The design and manufacture of the miniature rolling piston rotary compressor of the present invention are such that parts geometries are scaled down as necessary but performance clearances, *e.g*., between vane width and vane slot, vane height and cylinder height, roller height and cylinder height, roller and the cylinder inner diameter and journal bearing clearance were kept the same as that of a state-of-the-art rotary compressor providing thermodynamic performance and reliability comparable to the state of the art. Even though the compressor assembly is significantly smaller in the present invention, it did not incur deterioration in performance. In one embodiment of the present invention, the various compressor clearances are: vane width clearance 0.0009/0.0004; vane end clearance - 0.0007/0.0003; roller end clearance - 0.0008/0.0004; cylinder set clearance - 0.0005/0.0003; and journal bearing clearance (with manganese phosphate dry lubricant, also referred to as Lubrite) - 0.0008/0.0002.

The primary parameters for the miniature rolling piston rotary compressor of the present invention are presented in Table 1.

**TABLE 1**

| Miniature Rolling Piston Rotary Compressor Parameters | | |
|---|---|---|
| **PARAMETER** | **RANGE** | **PREFERRED RANGE** |
| Lubricated Surface Area | about (5.45 in²) 3516.12mm² to about (9.10 in²) 5870.96mm² | about (6.15 in²) 3967.73mm² to about (8.20 in²) 5290.31mm² |
| Oil Volume | about 10 cc to about 46.25 cc | about 20 cc to about 40 cc |
| Oil Pump Rate | about 0.75 cc/min to about 6.2 cc/min | about 0.90 cc/min to about 5.50 cc/min |
| Cooling Power Density | about (13.6 watts/in³) 829922.9watt/m³ to about (41 watts/in³) 2501973.5watt/m³ | (26.85 watts/in³) 1638487.53watt/m³ to (32.50 watts/in³) 1983271.68watt/m³ |
| Cooling Power Density (at 145°F Condensing) | about (200.00 watts/lb) 440.92watt/kg to about (312.50watts/lb) 698.94watt/kg | (227.50 watts/lb) 501.55watt/kg to (275.00 watts/lb) 606.27watt/kg |
| Compressor Weight | about (0.8 lbs) 362.87g to about (1.7 lbs 771.11g | about (0.8 lbs) 362.87g to about (1.5 lbs) 680.39g; about (1.0 lbs) 453.59g to about (1.4lbs) 635.03g |
| Compressor Volume | about (7.50 in³) 122902.98m³ to about (20.00 in³) 327741.28mm³ | about (8.50 in³) 139290.04mm³ to about (12.10 in³) 198283.47mm³; |
| Compressor Diameter | up to about (2.5 in.) 63.5 mm | about (1.5 in.) 38.1 mm to about (2.5 in.) 63.5mm |
| Compressor Axial Length | up to about (3.5 in.) 88.9mm | about (1.5 in.) 38.1mm to about (3.0 in.) 76,2mm; about (2.0 in.) 50.8mm to about (2.8 in) 71.1 mm. |
| Displacement (measured per revolution) | up to about 3.00 cc | about 0.90 cc to about 3.0 cc; about 1.8 cc to about 3.0 cc |
| COP (for the operating conditions of interest) | about 1.5 to about 4.5 | |
| Upper flange bearing length | about (0.40 in.) 10,16mm to about (0.50 in) 12,7mm. | about (0.44 in.) 11.176mm to about (0.45 in.) 11,43mm |
| Lower flange bearing length | about (0.35 in.) 8,89mm to about (0.40 in.) 10.16mm | about (0.36 in.) 9,14mm to about (0.37 in.) 9,4mm |
| Discharge port diameter | about (0.08 in. 2,03mm to about (0.20 in.) 5.08mm | about (0.12 in.) 3,0.5mm to about (0.14 in.) 3.56mm |
| Inlet port diameter | about (0.125 in.) 3.175mm to about (0.375 in. 9.525mm | about (0.19 in.) 4.83mm to about (0.21 in.) 5.33mm |
| Oil pump shaft hole diameter | about (0.16 in.) 4.06mm to about (0.24 in.) 6.1mm | about (0.19 in.) 4.83mm to about (0.21 in.) 5,33mm |
| Vane width | about (0.09 in.) 2.29mm to about (0.15 in.) 3,81 | about (0.12 in.) 3.05mm to about (0.13 in.) 3,3mm |
| Vane slot length | about (0.28 in.) 7.11mm to about (0.33 in.) 8.38mm | about (0.31 in.) 7.87mm to about (0.32 in) 8.13mm. |
| Roller wall thickness | about (0.10 in.) 2.54mm to about (0.13 in.) 3.3mm | about (0.11 in.) 2.79mm to about (0.12 in) 3,05mm |
| Case/end cap thickness | about (0.03 in.) 0.76mm to about (0.07 in.) 1,78mm | about (0.04 in.) 1.02mm to about (0.06 in.) 1.52mm |
| Bore/height ratio | about 2.0 to about 2.4 | about 2.0 to about 2.1 |

The design and manufacture of the miniature rolling piston rotary compressor of the present invention are such that parts geometries were scaled down as necessary but dimensional tolerances for individual parts were kept the same as the state of the art rotary compressor. The only exception is the vane slot **135** in cylinder **117** in which the vane reciprocates. The vane slot tolerance is +/- (0.0002") 0.00508mm, which is tighter than that for the state-of-the-art compressors. This is achieved by the novel use of wire EDM (Electrical Discharge Machining) instead of a "broaching" process that is currently used for the state of the art. The tighter tolerance of the vane slot **135** eliminates the need for selective vane **106** / cylinder **117** matching done for state-of-the-art compressors to achieve the desired clearance. This vastly simplifies the assembly process. The interchangeability aspect consequently makes the present invention more cost-effective.

The design and manufacture of the miniature compressor differs significantly from the state-of-the-art rotary compressor design and manufacture. In state-of-the-art rotary compressor design and manufacture, hermetically sealed electrical contacts are achieved with a separate feedthrough that is mass-produced from a stamped steel cup of about 3,81 cm (1.5 in) in diameter and three nickel-coated steel pins that are sealed into the steel cup with insulating glass, with the steel cup welded to the top cap, and a nylon terminal block is used for attaching the motor wires on the inside of the compressor casing, and the electrical conductors from the power source are attached to the outside of the feedthrough using standard electrical terminals. Whereas, the design and manufacture of the present miniature compressor involves the installation of the feedthrough pins **108** directly into a custom stamped top cap **101a,** with one standard nylon terminal block **111a** being used for making the connection to the motor on the inside and another standard nylon terminal block **111b** being used for making the connection to the power source on the outside of the compressor assembly **100.** For the miniature rolling piston rotary compressor, the holes for the glass insulation **109** and steel pins **108** are extruded in the stamping process. Generally, the size of the feedthrough cup, pins and the connectors limit the minimization of compressor axial length. The design of the miniature rolling piston rotary compressor of the present invention enables the reduction in compressor axial length, reduction in raw materials used, and reduction in manufacturing costs. Further, this design also eliminates the need for welding the feedthrough into the top cap **101a.**

In state-of-the-art rotary compressor design and manufacture, the discharge tube is placed along the axial direction of rotation of the compressor in the center of the top cap, preventing the minimization of the compressor axial length, and the tube connecting the compressor to the condenser being brazed to the discharge tube, thereby adding an additional height requirement. Whereas, the miniature compressor of the present invention is designed and manufactured such that the discharge tube **116** is placed perpendicular to the axis of rotation of the compressor in the side of the top cap **101a,** which then reduces the axial length of the compressor and tubes that would be attached to the compressor.

In state-of-the-art rotary compressor design and manufacture, a top cap is inserted into the inside diameter of the main casing and welded to provide the hermetic seal, which requires sufficient room inside the compressor to overlap the top cap and casing, and provide a location for welding the two pieces that is sufficiently far from the motor windings to prevent heat damage from the conventional MIG welding process. Whereas, the design and manufacture of the present miniature compressor involve the placement of a top cap **101a** over the outside diameter of the casing **114** where a weld seam is located directly adjacent the motor stator **110.** In one embodiment, heat damage to the motor is prevented by using a plasma weld technique that focuses a smaller amount of energy directly on the weld seam. The compressor assembly weld is achieved quickly without the need of the filler wire so that very little heat is conducted away from the welded material to other parts of the miniature compressor, such as the motor.

In state-of-the-art rotary compressor design and manufacture, an AC induction motor is typically used. This motor type is relatively inexpensive to manufacture, however, it has a low power density that results in a fairly large diameter and large axial length to meet the torque requirement of the compressor. Further, the AC motor is a single speed motor, typically operating at about 3500 rpm, and requires a large start capacitor to handle the start-up current surge. Whereas, the design and manufacture of the miniature compressor involves the use of a high speed brushless DC motor (comprising a stator **110** and rotor **118**). This motor has a very high power density that results in reductions in diameter, axial length, and weight of the compressor. In addition, the brushless motor can operate at speeds of up to 10,000 rpm, thereby enabling the compressor size reduction while providing an equivalent capacity.

In state-of-the-art rotary compressor design and manufacture, the AC induction motor used in the typical rotary compressor, as described above, operates at a single speed. This results in the requirement of the cooling system, which utilizes the state-of-the-art compressor to cycle on and off, to match cooling capacity to the changing load. This leads to inefficiencies as the compressor has large start-up current surges and the cooling system will have off-cycle thermal losses, both leading to higher operating costs. Whereas, the design and manufacture of the miniature compressor involve the use of a variable speed brushless DC motor. This motor can start at very low speeds to eliminate the start-up current surge. It also can operate at any speed within a wide range to closely match the cooling capacity of the compressor to the changing load. The cooling system will ultimately use less energy to operate, which thus leads to reduced operating costs as well as reduced system weight for battery-operated systems. This is especially advantageous in portable personal cooling systems where the entire cooling system and power source are carried by the user.

In state-of-the-art rotary compressor design and manufacture, a large oil sump is provided at the base of the compressor case. All rotary compressors lose some of the oil in the sump to the refrigeration system during operation. Oil mist or droplets mix with discharge gas and are carried out of the discharge tube and into the condenser. Oil will flow through the system and eventually return to the compressor via the suction tube. Eventually, system equilibrium is reached and oil flow into the compressor is equivalent to the oil flow out of the compressor. However, a certain amount of oil always remains in the system, resulting in a decrease of oil in the compressor sump. If this oil level decreases below a certain level, oil will not be provided to the oil pump at the end of the shaft and lubrication to the compressor will be lost. This results in increased leakage and friction. Both factors result in high power consumption and premature compressor failure. For this reason, the amount of oil in the compressor sump must be maximized. However, the oil level in the sump cannot exceed about the middle of the cylinder. If the oil level is higher than this, it will flow into the compressor and fill the compression chamber during the off-cycle. When the compressor is started, an extremely high current surge would result due to the incompressibility of the oil. This current surge would exceed a safe limit and normally blow a fuse or trip a circuit breaker. Also, the oil forced out of the discharge valve **113b** would damage the valve backer **113a** and render the compressor useless. To prevent this from happening, state-of-the-art rotary compressor casings are large enough to provide adequate oil sump capacity without overfilling the sump. Whereas, the design and manufacture of the miniature compressor involves the use of the variable speed brushless motor (comprising stator **110** and rotor **118**) and a novel control scheme to achieve a compact design while having a sufficient oil quantity in the sump **123.** The oil level in the miniature rolling piston rotary compressor of the present invention is typically above the mid-point of the cylinder **117.** The miniature rolling piston rotary compressor uses a start-up process that slowly purges oil out of the cylinder compression chamber **128** without a surge in current and without damage to any compressor parts. The electronic control for the compressor speed may be set to start-up at a relatively low speed, such as 5 rpm. This start-up speed very slowly moves the oil from the cylinder compression chamber **128** and out of the discharge valve port **113** at very low torque and thus low current draw. Once the oil has been purged from the chamber **128,** the compressor speed may be safely ramped up to operating speed (several thousand rpm). This novel start-up control scheme results in the ability to fill the sump **123** with oil to higher levels, and thus enables the reduction in the size of the compressor assembly **100,** thereby resulting in reduced compressor size, weight and manufacturing costs.

In state-of-the-art rotary compressor manufacture, casings are typically welded together using a MIG welding process. MIG welding automatically feeds a filler wire into the two materials that are being welded. Whereas, in one embodiment of the present invention, manufacturing the miniature compressor involves plasma welding as a safeguard against motor damage. Plasma welding process is preferable because it inputs less heat to the parts being joined and does not require the addition of a filler wire.

During the manufacturing process, the compressor pump parts are typically positioned inside the compressor casing **114** for welding. This involves the addition of three holes in the compressor casing **114** to facilitate tack welding of the compressor pump to the casing **114.** The state-of-the-art rotary compressors do not typically have holes in the casing for tack welding. Because of the larger size of the state-of-the-art compressors, a hole can be burned through the casing **114** during the tack welding process without having adverse effects on the tack weld. Due to the small size of the present miniature compressor and the preferable thin casing material, it would be impractical to burn through the casing as it would be difficult to control the size of the hole being burned. Instead, the present miniature rotary compressor comprises a pilot hole in the casing at the location of the tack welds to facilitate the tack welding process.

In state-of-the-art rotary compressor design and manufacture, a counterweight is used on the motor rotor to balance the rotating assembly. The counterweight is located on the bottom side of the rotor above the discharge muffler and discharge port. The counterweight is typically a crescent shaped mass with a significantly large cross sectional frontal area that is perpendicular to the direction of rotation. This counterweight frontal area plows through the refrigerant vapor and oil mist adding significant turbulence resulting in a thorough mixing of the refrigerant and oil. The well mixed oil and refrigerant mixture leads to more oil being pumped out of the compressor through the discharge tube and reduces the level of oil left in the sump. As explained above, this reduced oil level can lead to premature compressor failure. Whereas, the design and manufacture of the miniature compressor of the present invention involves masking the frontal area of the counterweight **122a** with a lightweight crescent shaped component **125a** mounted on the top of the rotor opposite the counterweight 122a and masking the frontal area of the counterweight 122b with a lightweight crescent shaped component 125b mounted on the bottom of the rotor **118** opposite the counterweight **122b** in order to reduce the oil leaving the compressor assembly **100,** as illustrated in **FIG. 1a****.** This novel light weight crescent shaped component forms a contiguous hollow cylinder with the counterweight, similar to a washer, so that there is no frontal area that would create turbulence and mixing of the refrigerant vapor with the oil as well as consume power due to churning of the mixture and high drag coefficient. The addition of this component does not hinder the balancing of the rotating assembly as it is fabricated from a very lightweight material and may also be hollow. Because less oil is pumped out of the compressor assembly **100,** the oil sump **123** can be small, which leads to a further miniaturization of the compressor.

In state-of-the-art rotary compressor manufacture, a muffler (also referred to as discharge muffler), manufactured from stamped sheet metal, covers the top flange where the compression chamber discharge port and discharge valve are located. The compression gas exiting the compression cylinder enters the muffler and travels a short distance where it exits the muffler via several holes located on the top surface. In this manner, the gas flow is directed at the bottom of the motor rotor where it impinges on the rotor and the rotating counterweight. In the present miniature compressor, where the rotor **118** and counterweight **122a** and **122b** are located very close to the top of the muffler **112,** gas and oil exiting the muffler **112** are in immediate contact with the spinning rotor **118.** This adds turbulence and increases the likelihood of oil remaining mixed with the gas and ultimately leaving the compressor. The present miniature compressor design incorporates a muffler **112** comprising radial holes 112a to facilitate oil separation. This design allows for the reduction in oil that leaves the compressor assembly **100** by placing the radial holes 112a of the muffler **112** on the vertical sides of the muffler **112.** Thus, the gas and oil flow do not strike the rotating motor directly, but instead are directed horizontally outward. The refrigerant gas and oil mixture impinges on the inside diameter of the casing **114,** where the oil tends to separate and return to the oil sump **123.** In one embodiment, oil loss from the compressor is reduced, allowing the rotor **118** to be placed very close to the top of the discharge muffler **112,** which thus results in the reduction in the size of the compressor assembly.

As noted above, the present invention pertains to a miniature rolling piston rotary compressor for use with primary refrigerants, and methods related thereto. The present invention should not be considered limited to the particular embodiments described above, but rather should be understood to cover all aspects of the invention as fairly set out in the appended claims. Various modifications, equivalent processes, as well as numerous structures to which the present invention may be applicable will be readily apparent to those skilled in the art to which the present invention is directed upon review of the present specification. The claims are intended to cover such modifications.

## Claims

1. A miniature rolling piston rotary gas compressor assembly (100), comprising:
a compressor mechanism comprising a single compression cylinder (117) having a single rolling piston,
a brushless DC motor, and
a casing (114) comprising a top cap (101a) and a discharge tube (116) placed perpendicular to the axis of rotation of the compressor through a side of said top cap (101a),
said miniature rolling piston rotary gas compressor assembly (100) having an axial length of up to 88.9 mm [3.5 in.].

2. A miniature rolling piston rotary gas compressor assembly (100) according to claim 1, said miniature rolling piston rotary gas compressor assembly (100) having a diameter of up to 63.5 mm [2.5 in.].

3. A miniature rolling piston rotary gas compressor assembly (100) according to claim 1 or 2, said miniature rolling piston rotary gas compressor assembly (100) having a displacement of up to 3.0 cc/revolution.

4. A miniature rolling piston rotary gas compressor assembly (100) according to any one of claims 1 to 3, said miniature rolling piston rotary gas compressor assembly (100) weighing up to 771.11 g [1.7 1b].

5. A miniature rolling piston rotary gas compressor assembly (100) according to any one of claims 1 to 4, comprising a discharge muffler (112) comprising radial holes (112a) for oil separation.

6. A miniature rolling piston rotary gas compressor assembly (100) according to any one of claims 1 to 5, said casing (114) being hermetically sealed or semi-hermetically sealed.

7. A miniature rolling piston rotary gas compressor assembly (100) according to any one of claims 1 to 6, said miniature rolling piston rotary gas compressor assembly (100) being usable with primary refrigerants as a working fluid to provide a cooling power density capability in the range of 829922.9 watts/m³ to 2501973.5 watts/m³ [13.6 watts/in³ to 41 watts/in³], or a cooling power density capability in the range of 440.92 watts/kg to 688.94 watts/kg [200.00 watts/lb to 312.50 watts/lb], preferably, said miniature rolling piston rotary gas compressor assembly (100) having a COP capability in the range of 1.85 to 2.25 at an evaporator temperature of 12.78 °C [55 °F] and a condenser temperature of 65.56 °C [150 °F], or a COP capability in the range of 3.8 to 4.6 at an evaporator temperature of 12.78 °C [55 °F] and a condenser temperature of 43.33 °C [110 °F].

8. A miniature rolling piston rotary gas compressor assembly (100) according to any one of claims 1 to 7, said motor comprising a stator (110) and a rotor (118), said stator (110) and rotor (118) being separated by an air gap, and said air gap acting as an oil separator.

9. A miniature rolling piston rotary gas compressor assembly (100) according to any one of claims 1 to 8, comprising a contiguous hollow cylinder comprising a counterweight (122a, 122b) and a lightweight crescent shaped component (125a, 125b).

10. An article comprising the miniature rolling piston rotary gas compressor assembly (100) of any one of claims 1 to 9, said article being a portable refrigeration and/or freezing device, a personal cooling system, or a microprocessor cooling system.

11. A method for manufacturing a miniature rolling piston rotary gas compressor assembly (100) of any one of claims 1 to 9, comprising the steps of:
a) machining parts of the compressor mechanism at a given set of tolerances, parts of the compressor mechanism further comprising a shaft (102), roller (104), a vane (106), a top bearing flange (103a) and a bottom bearing flange (103b),
b) incorporating a brushless DC motor, and
c) incorporating a casing (114).

12. A method for manufacturing a miniature rolling piston rotary gas compressor assembly (100) according to claim 11, comprising incorporating an oil sump (123), said oil sump (123) being configured to comprise oil at a level greater than half the cylinder height.

13. A method for manufacturing a miniature rolling piston rotary gas compressor assembly (100) according to claim 11 or 12, comprising incorporating, into said miniature rolling piston rotary gas compressor assembly (100), one or more electrical feedthrough pins (108) sealed into the top cap (101a) via an insulating glass (109).

14. A method for manufacturing a miniature rolling piston rotary gas compressor assembly (100) according to any one of claims 11 to 13, said vane (106) and cylinder being assembled such that said vane (106) and cylinder (117) are in communication with each other and are matched non-selectively.

15. A method of controlling the miniature rolling piston rotary gas compressor assembly (100) of any one of claims 1 to 14, said method comprising matching the brushless DC motor's speed to a load demand.

## Patentansprüche

1. Miniatur-Rollkolben-Rotations-Gaskompressoraufbau (100), aufweisend:
einen Kompressionsmechanismus aufweisend einen einzelnen Kompressionszylinder (117) mit einem einzelnen Rollkolben, einen bürstenlosen Gleichstrommotor, und ein Gehäuse (114) aufweisend einen oberen Deckel (101a) und ein Auslassrohr (116), das senkrecht zur Drehachse des Kompressors durch eine Seite des oberen Deckels (101a) führend angeordnet ist, wobei der Miniatur-Rollkolben-Rotations-Gaskompressoraufbau (100) eine axiale Länge von bis zu 88,9 mm [3,5 in] hat.

2. Miniatur-Rollkolben-Rotations-Gaskompressoraufbau (100) nach Anspruch 1, wobei der Miniatur-Rollkolben-Rotations-Gaskompressoraufbau (100) einen Durchmesser von bis zu 63,5 mm [2,5 in] hat.

3. Miniatur-Rollkolben-Rotations-Gaskompressoraufbau (100) nach Anspruch 1 oder 2, wobei der Miniatur-Rollkolben-Rotations-Gaskompressoraufbau (100) einen Hubraum von bis zu 3,0 ccm/Umdrehung aufweist.

4. Miniatur-Rollkolben-Rotations-Gaskompressoraufbau (100) nach einem der Ansprüche 1 bis 3, wobei der Miniatur-Rollkolben-Rotations-Gaskompressoraufbau (100) bis zu 771,11 g [1,71b] wiegt.

5. Miniatur-Rollkolben-Rotations-Gaskompressoraufbau (100) nach einem der Ansprüche 1 bis 4, aufweisend einen Auslass-Schalldämpfer (112) enthaltend radiale Löcher (112a) zur Ölabscheidung.

6. Miniatur-Rollkolben-Rotations-Gaskompressoraufbau (100) nach einem der Ansprüche 1 bis 5, wobei das Gehäuse (114) hermetisch abgedichtet oder semihermetisch abgedichtet ist.

7. Miniatur-Rollkolben-Rotations-Gaskompressoraufbau (100) nach einem der Ansprüche 1 bis 6, wobei der Miniatur-Rollkolben-Rotations-Gaskompressoraufbau (100) mit primären Kältemitteln αls Betriebsflüssigkeit verwendbar ist, um eine Kühlungsleistungsdichte im Bereich von 829922,9 Watt/m³ bis 2501973,5 Watt/m³ [13.6 Watt/in³ bis 41 Watt/in³] oder eine Kühlungsleistungsdichte im Bereich von 440,92 Watt/kg bis 688,94 Watt/kg [200,00 Watt/lb bis 312,50 Watt/lb] zu gewährleisten, wobei der Miniatur-Rollkolben-Rotations-Gaskompressoraufbau (100) vorzugsweise einen COP-Wert im Bereich von 1,85 bis 2,25 bei einer Verdampfertemperatur von 12,78°C [55°F] und einer Kondensator-temperatur von 65,56°C [150°F], oder einen COP-Wert im Bereich von 3,8 bis 4,6 bei einer Verdampfertemperatur von 12,78°C [55°F] und einer Kondensatortemperatur von 43,33°C [110°F] aufweist.

8. Miniatur-Rollkolben-Rotations-Gaskompressoraufbau (100) nach einem der Ansprüche 1 bis 7, wobei der Motor einen Stator (110) und einen Rotor (118) aufweist, wobei Stator (110) und Rotor (118) durch einen Luftspalt getrennt sind, und wobei der Luftspalt als ein Ölabscheider fungiert.

9. Miniatur-Rollkolben-Rotations-Gaskompressoraufbau (100) nach einem der Ansprüche 1 bis 8, aufweisend einen damit zusammenhängenden Hohlzylinder, der ein Gegengewicht (122a, 122b) und ein leichtgewichtiges, halbmondförmiges Bestandteil (125a, 125b) aufweist.

10. Gegenstand aufweisend den Miniatur-Rollkolben-Rotations-Gaskompressoraufbau (100) nach einem der Ansprüche 1 bis 9, wobei der Gegenstand ein tragbares Kühl- und/oder Gefriergerät, ein Haushaltskühlsystem oder ein Mikroprozessor-Kühlsystem ist.

11. Verfahren zur Herstellung eines Miniatur-Rollkolben-Rotations-Gaskompressoraufbaus (100) nach einem der Ansprüche 1 bis 9, umfassend die Schritte:
a) Fertigen von Teilen des Kompressormechanismus innerhalb gegebener Toleranzgrenzen, wobei Teile des Kompressormechanismus zusätzlich eine Welle (102), Rolle (104), einen Schieber (106), einen oberen Lagerflansch (103a) und einen unteren Lagerflansch (103b) aufweisen,
b) Einbringen eines bürstenlosen Gleichstrommotors, und
c) Vereinigen mit einem Gehäuse (114).

12. Verfahren zur Herstellung eines Miniatur-Rollkolben-Rotations-Gaskompressoraufbaus (100) nach Anspruch 11, aufweisend ein Einbringen einer Ölwanne (123), wobei die Ölwanne (123) so ausgestaltet ist, dass sie in der Lage ist, Öl auf einem Niveau über der Hälfte der Zylinderhöhe zu fassen.

13. Verfahren zur Herstellung eines Miniatur-Rollkolben-Rotations-Gaskompressoraufbaus (100) nach Anspruch 11 oder 12, aufweisend ein Einbringen von einem oder mehreren stromdurchführenden Anschlüssen (108) in den Miniatur-Rollkolben-Rotations-Gaskompressoraufbau (100), die mittels eines isolierenden Glases (109) dichtschließend in die obere Kappe (101a) eingebracht werden.

14. Verfahren zur Herstellung eines Miniatur-Rollkolben-Rotations-Gaskompressoraufbaus (100) nach einem der Ansprüche 11 bis 13, wobei der Schieber (106) und der Zylinder dermaßen montiert werden, dass Schieber (106) und Zylinder (117) in Verbindung miteinander sind und nicht-selektiv aufeinander abgestimmt sind.

15. Verfahren zur Steuerung des Miniatur-Rollkolben-Rotations-Gaskompressoraufbaus (100) nach einem der Ansprüche 1 bis 14, aufweisend ein Anpassen der Drehzahl des bürstenlosen Gleichstrommotors auf eine Belastungsanforderung.

## Revendications

1. Ensemble miniature de compresseur à gaz rotatif à piston sur roulement (100), comprenant :
un mécanisme à compresseur qui comprend un unique cylindre de compression (117) présentant un unique piston sur roulement ;
un moteur DC sans balais ; et
un carter (114) qui comprend un chapeau supérieur (101a) et un tube d'évacuation (116) placé perpendiculaire à l'axe de rotation du compresseur à travers un côté dudit chapeau supérieur (101a) ;
ledit ensemble miniature de compresseur à gaz rotatif à piston sur roulement (100) présentant une longueur axiale maximum de 88,9 mm [3,5 pouces].

2. Ensemble miniature de compresseur à gaz rotatif à piston sur roulement (100) selon la revendication 1, ledit ensemble miniature de compresseur à gaz rotatif à piston sur roulement (100) présentant un diamètre maximum de 63,5 mm [2,5 pouces].

3. Ensemble miniature de compresseur à gaz rotatif à piston sur roulement (100) selon la revendication 1 ou 2, ledit ensemble miniature de compresseur à gaz rotatif à piston sur roulement (100) présentant une cylindrée maximum de 3,0 cm³/tr.

4. Ensemble miniature de compresseur à gaz rotatif à piston sur roulement (100) selon l'une quelconque des revendications 1 à 3, ledit ensemble miniature de compresseur à gaz rotatif à piston sur roulement (100) présentant un poids maximum de 771,11 g [1,71b].

5. Ensemble miniature de compresseur à gaz rotatif à piston sur roulement (100) selon l'une quelconque des revendications 1 à 4, comprenant un silencieux d'évacuation (112) comportant des orifices radiaux (112a) pour un déshuilage.

6. Ensemble miniature de compresseur à gaz rotatif à piston sur roulement (100) selon l'une quelconque des revendications 1 à 5, ledit carter (114) étant hermétiquement scellé ou semi-hermétiquement scellé.

7. Ensemble miniature de compresseur à gaz rotatif à piston sur roulement (100) selon l'une quelconque des revendications 1 à 6, ledit ensemble miniature de compresseur à gaz rotatif à piston sur roulement (100) étant utilisable avec des fluides frigorigènes primaires en tant que fluide actif afin de fournir une capacité de densité de puissance de refroidissement qui se situe dans une plage comprise entre 829922,9 W / m³ et 2501973,5 W / m³ [entre 13,6 W / in³ et 41 W / in³], ou une capacité de densité de puissance de refroidissement qui se situe dans une plage comprise entre 440,92 W / kg et 688,94 W / kg [entre 200,00 W/lb et 312,50 W / lb], de préférence, ledit ensemble miniature de compresseur à gaz rotatif à piston sur roulement (100) présentant une capacité COP qui se situe dans une plage comprise entre 1,85 et 2,25 à une température de l'évaporateur égale à 12,78 °C [55 °F] et une température du condenseur égale à 65,56 °C [150 °F], ou une capacité COP qui se situe dans une plage comprise entre 3,8 et 4,6 à une température de l'évaporateur égale à 12,78 °C [55 °F] et une température du condenseur égale à 43,33 °C [110 °F].

8. Ensemble miniature de compresseur à gaz rotatif à piston sur roulement (100) selon l'une quelconque des revendications 1 à 7, ledit moteur comprenant un stator (110) et un rotor (118), ledit stator (110) et ledit rotor (118) étant séparés par un entrefer, et ledit entrefer agissant comme un séparateur d'huile.

9. Ensemble miniature de compresseur à gaz rotatif à piston sur roulement (100) selon l'une quelconque des revendications 1 à 8, comprenant un cylindre creux contigu comportant un contrepoids (122a, 122b) et un composant léger en forme de croissant (125a, 125b).

10. Article comprenant l'ensemble miniature de compresseur à gaz rotatif à piston sur roulement (100) selon l'une quelconque des revendications 1 à 9, ledit article étant un dispositif portatif de réfrigération et / ou de congélation, un système de refroidissement personnel, ou un système de refroidissement de microprocesseur.

11. Procédé de fabrication d'un ensemble miniature de compresseur à gaz rotatif à piston sur roulement (100) selon l'une quelconque des revendications 1 à 9, comprenant les étapes consistant à :
a) usiner des parties du mécanisme à compresseur selon un ensemble donné de tolérances, les parties du mécanisme à compresseur comprenant en outre un arbre (102), un rouleau (104), une aube (106), une bride de roulement supérieure (103a) et une bride de roulement inférieure (103b) ;
b) incorporer un moteur DC sans balais ; et
c) incorporer un carter (114).

12. Procédé de fabrication d'un ensemble miniature de compresseur à gaz rotatif à piston sur roulement (100) selon la revendication 11, comprenant une étape consistant à incorporer un carter d'huile (123), ledit carter d'huile (123) étant configuré pour comporter de l'huile à un niveau supérieur à la moitié de la hauteur du cylindre.

13. Procédé de fabrication d'un ensemble miniature de compresseur à gaz rotatif à piston sur roulement (100) selon la revendication 11 ou 12, comprenant une étape consistant à incorporer, dans ledit ensemble miniature de compresseur à gaz rotatif à piston sur roulement (100), une ou plusieurs broches électriques traversantes (108) scellées dans le chapeau supérieur (101a) par l'intermédiaire d'un verre isolant (109).

14. Procédé de fabrication d'un ensemble miniature de compresseur à gaz rotatif à piston sur roulement (100) selon l'une quelconque des revendications 11 à 13, ladite aube (106) et ledit cylindre étant assemblés de telle sorte que ladite aube (106) et ledit cylindre (117) communiquent l'un avec l'autre et sont assortis de manière non sélective.

15. Procédé de commande de l'ensemble miniature de compresseur à gaz rotatif à piston sur roulement (100) selon l'une quelconque des revendications 1 à 14, ledit procédé comprenant une étape consistant à faire correspondre la vitesse du moteur DC sans balais à une charge.
